# EUROPEAN PATENT APPLICATION

(11) **EP 4 847 948 A1**
(43) Date of publication of application: **02.12.2026**
(21) Application number: 25192111.0
(22) Date of filing: 28.07.2025
(51) Int. Cl.: G01S 7/481, G01S 17/42, G02B 27/09, H01S 5/42

(54) **LIGHTING ASSEMBLY FOR LIDAR APPARATUSES**

(30) Priority: 26.05.2025 KR 20250068298
(71) Applicant: Hyundai Mobis Co., Ltd., Gangnam-gu Seoul 06141 (KR)
(72) Inventor: DO, Duk Ho, 16891 Yongin-si, Gyeonggi-do (KR); KIM, Da Ye, 16891 Yongin-si, Gyeonggi-do (KR); PARK, Dong Joo, 16891 Yongin-si, Gyeonggi-do (KR)
(74) Representative: Jung, Minkyu

(57) **Abstract**

Disclosed is a lighting module for light detection and ranging (LiDAR) apparatuses. The lighting module includes a vertical cavity surface emitting laser (VCSEL) array including a plurality of light-emitting sections formed to emit light in a first direction, and a diffraction component disposed on the VCSEL array in the first direction, and configured to transmit a portion of the light and diffract another portion of the light.

## Description

### CROSS-REFERENCE TO RELATED APPLICATION

The present application claims priority and the benefit of Korean Patent Application No. 10-2025-0068298, filed on May 26, 2025 in the Korean Intellectual Property Office, the entire disclosure of which is incorporated herein by reference.

### BACKGROUND

### FIELD

Exemplary embodiments of the present disclosure relate to a lighting module for light detection and ranging (LiDAR) apparatuses, and more particularly, to a lighting module for LiDAR apparatuses capable of increasing a field of view.

### DISCUSSION OF THE BACKGROUND

Generally, a solid state light detection and ranging (LiDAR) sensor used for position recognition of mobility apparatuses such as vehicles and robots includes a lighting component and a light receiving component without a drive component for beam scanning. The lighting component mainly uses an array-type vertical cavity surface emitting laser (VCSEL) as a light source, and measures the time of flight of light reflected from an object and returning back, through the light receiving component including other optical components and a single-photon avalanche diode (SPAD) sensor. Unlike rotational LiDARs using rotating mirrors or the like, solid state LiDARs do not include mechanical drive components and are therefore robust against vibration, but are relatively low in sensing sensitivity and are therefore used for short-range sensing.

Because such solid state LiDARs do not include mechanical drive components, a limitation in a field of view inevitably arises in comparison with rotational LiDARs, which can change the field of view. Accordingly, there is a need for a method capable of improving the field of view of a solid state LiDAR.

The background art of the present disclosure is disclosed in Korean Patent No. 10-2691925 (registered on July 31, 2024, entitled "LASER OPTICAL SYSTEM FOR LIDAR").

### SUMMARY

Various embodiments are directed to providing a lighting module for light detection and ranging (LiDAR) apparatuses capable of increasing a field of view.

A lighting module for light detection and ranging (LiDAR) apparatuses according to an embodiment of the present disclosure may include: a vertical cavity surface emitting laser (VCSEL) array including a plurality of light-emitting sections formed to emit light in a first direction; and a diffraction component disposed on the VCSEL array in the first direction, and configured to transmit a portion of the light and diffract another portion of the light.

The lighting module may further include a refraction component disposed between the VCSEL array and the diffraction component, and configured to refract the light that is generated from the VCSEL array and is incident on the refraction component.

The diffraction component may include: a diffraction body; and a first diffraction element portion provided on a surface of the diffraction body, and configured to diffract the light in a second direction perpendicular to the first direction.

A propagation direction of first transmitted light that passes through the diffraction component and a propagation direction of first diffracted light that is diffracted by the first diffraction element portion may intersect with each other.

A first transmitted light area formed by the first transmitted light may be located between a plurality of first diffracted light areas formed by the first diffracted light.

The diffraction component may include a second diffraction element portion provided on a surface of the diffraction body, and configured to transmit a first portion of the first transmitted light and a first portion of the first diffracted light, and to diffract a second portion of the first transmitted light and a second portion of the first diffracted light in a third direction perpendicular to the first direction and the second direction.

The first portion of the first transmitted light may pass through the second diffraction element portion and form second transmitted light. The second portion of the first transmitted light may be diffracted by the second diffraction element portion in the third direction and form transmitted-diffracted light. The first portion of the first diffracted light may pass through the second diffraction element portion and form diffracted-transmitted light. The second portion of the first diffracted light may be diffracted by the second diffraction element portion in the third direction and form second diffracted light.

A second transmitted light area formed by the second transmitted light may be located between a plurality of transmitted-diffracted light areas formed by the transmitted-diffracted light. A diffracted-transmitted light area formed by the diffracted-transmitted light may be located between a plurality of second diffracted light areas formed by the second diffracted light.

The diffraction component may include a plurality of diffraction element bodies protruding from the surface of the diffraction body and configured to diffract the light.

The diffraction component may further include an antireflection component disposed in the diffraction body and configured to prevent reflection of the light.

The first diffraction element portion may be provided on an incident surface of the diffraction body on which the light is incident.

The first diffraction element portion may be provided on an exit surface of the diffraction body from which the light exits.

According to an embodiment of the present disclosure, a field of view may be increased by diffracting light generated from a lighting module for LiDAR apparatuses.

In addition, according to an embodiment of the present disclosure, the production cost may be reduced by decreasing the number of array-type vertical cavity surface emitting lasers (VCSELs) arranged in the lighting module for LiDAR apparatuses.

Furthermore, according to an embodiment of the present disclosure, the lighting module may be downsized by decreasing the number of array-type VCSELs arranged in the lighting module for LiDAR apparatuses.

### BRIEF DESCRIPTION OF THE DRAWINGS

FIG. 1 is a front view schematically illustrating a lighting module for light detection and ranging (LiDAR) apparatuses according to an embodiment of the present disclosure.
FIG. 2 is a plan view illustrating a vertical cavity surface emitting laser (VCSEL) array of the lighting module for LiDAR apparatuses according to an embodiment of the present disclosure.
FIG. 3 schematically illustrates light emitted from a diffraction component according to a first embodiment of the present disclosure.
FIG. 4 schematically illustrates light emitted from a diffraction component according to a second embodiment of the present disclosure.
FIG. 5 is a sectional view schematically illustrating a first embodiment of a diffraction element body according to the present disclosure.
FIG. 6 schematically illustrates light emitted from a second embodiment of the diffraction element body according to the present disclosure.
FIG. 7 is a sectional view schematically illustrating the second embodiment of the diffraction element body according to the present disclosure.
FIG. 8 schematically illustrates a third embodiment of the diffraction element body according to the present disclosure.
FIG. 9 schematically illustrates a fourth embodiment of the diffraction element body according to the present disclosure.
FIG. 10 schematically illustrates a fifth embodiment of the diffraction element body according to the present disclosure.
FIG. 11 schematically illustrates an embodiment in which an antireflection component is disposed on a diffraction body according to an embodiment of the present disclosure.
FIG. 12 is a perspective view illustrating a first embodiment of the structure of the diffraction component according to the present disclosure.
FIG. 13 is a perspective view illustrating a second embodiment of the structure of the diffraction component according to the present disclosure.
FIG. 14 is a perspective view illustrating a third embodiment of the structure of the diffraction component according to the present disclosure.

### detailed DESCRIPTION OF THE ILLUSTRATED EMBODIMENTS

Hereinafter, embodiments of a lighting module for light detection and ranging (LiDAR) apparatuses according to the present disclosure will be described with reference to the accompanying drawings. It should be noted that the drawings are not to precise scale and may be exaggerated in thickness of lines or sizes of components for descriptive convenience and clarity only. Furthermore, the terms as used herein are defined by taking functions of the present disclosure into account and can be changed according to the custom or intention of users or operators. Therefore, definition of the terms should be made according to the overall disclosures set forth herein.

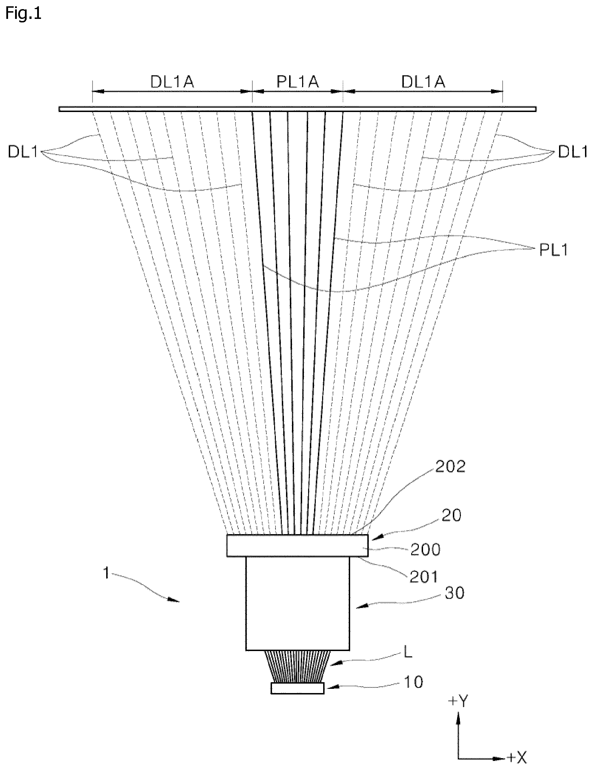

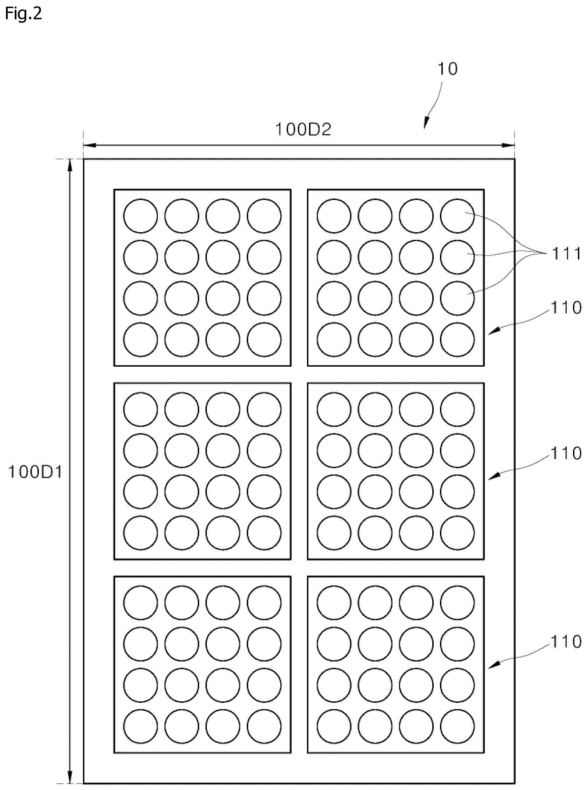

FIG. 1 is a front view schematically illustrating a lighting module for LiDAR apparatuses according to an embodiment of the present disclosure. FIG. 2 is a plan view illustrating a vertical cavity surface emitting laser (VCSEL) array of the lighting module for LiDAR apparatuses according to an embodiment of the present disclosure.

The lighting module 1 for LiDAR apparatuses may include a VCSEL array 10 and a diffraction component 20. In some embodiments, the lighting module 1 may be referred to as a lighting assembly.

The VCSEL array 10 may emit light L. The light L emitted from the VCSEL array 10 may travel in a direction either parallel to one direction (e.g., a +Y-axis direction) or intersecting with the one direction (e.g., the +Y-axis direction).

The VCSEL array 10 may include an array body 100, a light-emitting section 110, and a light-emitting element 111.

The array body 100 may have a substantially plate-like shape. A length of the array body 100 may be defined as an array body length 100D1, and a width of the array body 100 may be defined as an array body width 100D2.

The light-emitting section 110 may be formed in the array body 100. A plurality of light-emitting sections 110 may be provided.

The light-emitting element 111 configured to generate light L may be disposed in the light-emitting section 110. A plurality of light-emitting elements 111 may be provided. A lens may be disposed on each light-emitting element 111. Light L generated from the light-emitting element 111 may be refracted by the lens so that a propagation path of the light L may be changed.

Light L generated from the VCSEL array 10 may pass through the diffraction component 20 or may be diffracted by the diffraction component 20.

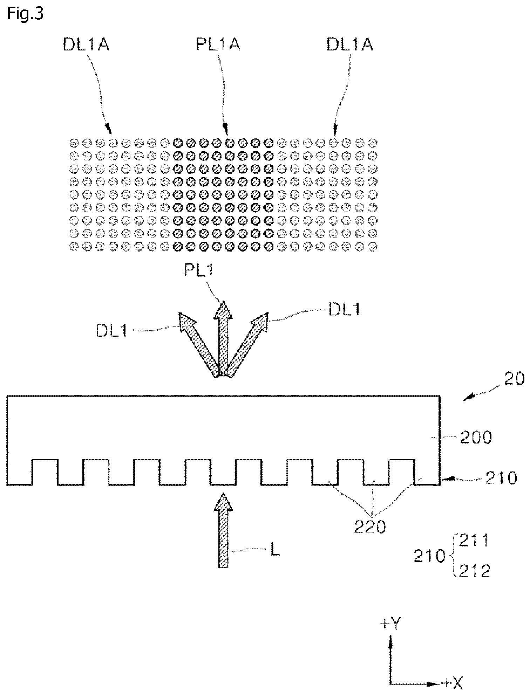

Light L that passes through the diffraction component 20 may be defined as first transmitted light (e.g., first transmitted light PL1 in FIG. 3), and light L that is diffracted by the diffraction component 20 may be defined as first diffracted light DL1.

The first transmitted light PL1 may pass through the diffraction component 20 and travel in one direction (e.g., in the +Y-axis direction).

The first diffracted light DL1 may be diffracted by the diffraction component 20 with respect to a different direction (e.g., in an X-axis direction). According to an embodiment, the first diffracted light DL1 may be diffracted by the diffraction component 20 in the +X-axis direction or in a -X-axis direction.

The first transmitted light PL1 passing through the diffraction component 20 may propagate to form a first transmitted light area PL1A. The first diffracted light DL1 diffracted by the diffraction component 20 may propagate to form a first diffracted light area DL1A.

As described above, as the light L passes through the diffraction component 20 or is diffracted by the diffraction component 20, a plurality of first diffracted light areas DL1A may be formed. According to an embodiment, the plurality of first diffracted light areas DL1A may be spaced apart from each other in one direction (e.g., in the X-axis direction).

The first transmitted light area PL1A may be formed adjacent to the first diffracted light areas DL1A. According to an embodiment, the first transmitted light area PL1A may be located between the plurality of first diffracted light areas DL1A.

The diffraction component 20 may include a diffraction body 200, an incident surface 201, and an exit surface 202.

The diffraction body 200 may have a substantially plate-like shape. A surface of the diffraction body 200 on which light L is incident may be defined as the incident surface 201, and a surface of the diffraction body 200 from which the light L exits may be defined as the exit surface 202.

The incident surface 201 may be disposed on a lower side (e.g., oriented in the -Y-axis direction) of the diffraction body 200. The exit surface 202 may be disposed on an upper side (e.g., oriented in the +Y-axis direction) of the diffraction body 200.

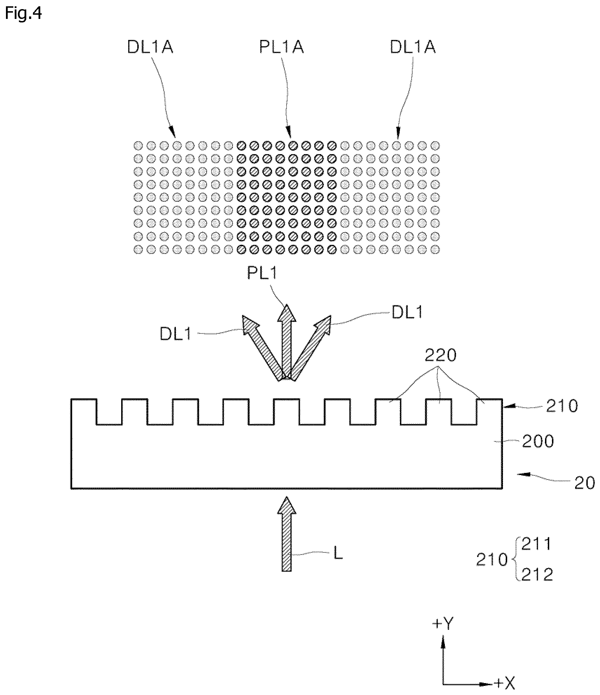

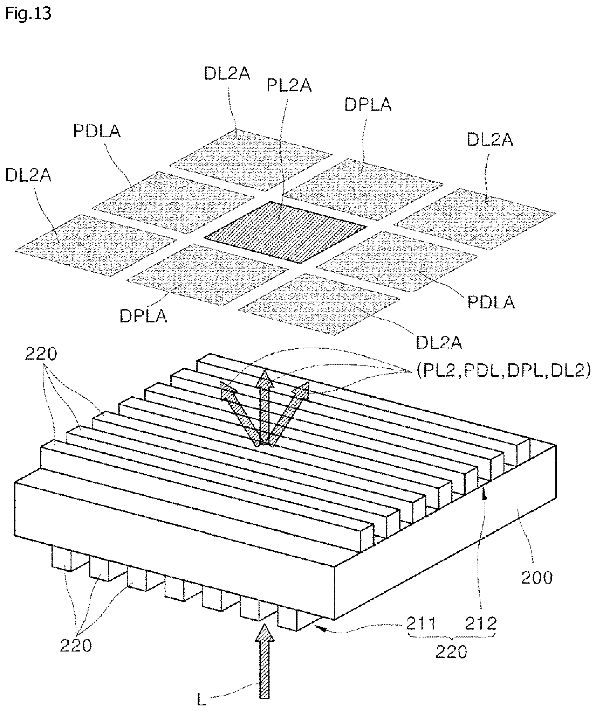

A diffraction element portion (e.g., a diffraction element portion 210 in FIG. 3), which is provided on the diffraction body 200 to diffract light L, may be disposed on the incident surface 201 (see FIG. 3), on the exit surface 202 (see FIG. 4), or on both the incident surface 201 and the exit surface 202 (see FIG. 13).

As the light L passes through the diffraction component 20 or is diffracted by the diffraction component 20 to form the first transmitted light area PL1A and the first diffracted light areas DL1A, and as the first transmitted light area PL1A is located between the plurality of first diffracted light areas DL1A, an angle of the light L emitted from the lighting module 1 for LiDAR apparatuses may be increased. That is, the field of view of the lighting module 1 for LiDAR apparatus may be increased.

As such, as the field of view of the lighting module 1 for LiDAR apparatuses is increased by the diffraction component 20, a wide field of view may be achieved through the VCSEL array 10 having a relatively small area. In other words, the array body length 100D1 and the array body width 100D2 may be reduced.

Furthermore, as the area of the VCSEL array 10 is reduced, the number of light-emitting elements 111 arranged on the array body 100 may also be reduced. Accordingly, the manufacturing cost of the lighting module 1 for LiDAR apparatuses may be lowered, and the volume of the lighting module 1 for LiDAR apparatuses may also be reduced.

The lighting module 1 for LiDAR apparatuses may further include a refraction component 30.

The refraction component 30 may change a propagation path of light L generated from the VCSEL array 10.

In an embodiment, the refraction component 30 may refract light L generated from the VCSEL array 10 so that the light L propagates in a direction parallel to one direction (e.g., the Y-axis direction).

In another embodiment, the refraction component 30 may refract the light L generated from the VCSEL array 10 so that the light L propagates in a direction intersecting with the one direction (e.g., the Y-axis direction).

As described above, as the propagation path of the light L is changed through the refraction component 30, the field of view of the lighting module 1 for LiDAR apparatuses may vary.

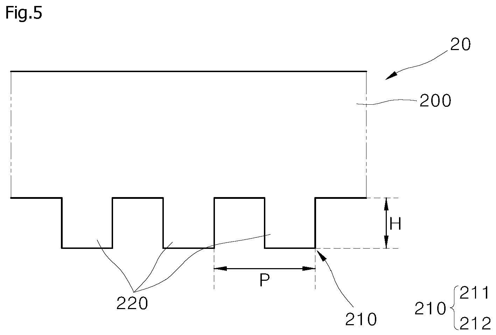

FIG. 3 schematically illustrates light emitted from a diffraction component according to a first embodiment of the present disclosure. FIG. 4 schematically illustrates light emitted from a diffraction component according to a second embodiment of the present disclosure. FIG. 5 is a sectional view schematically illustrating a first embodiment of a diffraction element body according to the present disclosure.

Referring to FIGS. 3 to 5, an embodiment of the diffraction component 20 and an embodiment of the diffraction element body 220 will be described.

The diffraction component 20 may include the diffraction body 200, the diffraction element portion 210, and the diffraction element body 220.

The diffraction element portion 210 may be disposed on the diffraction body 200. The diffraction element portion 210 may transmit light L to form the first transmitted light PL1, and may diffract the light L to form the first diffracted light DL1.

In an embodiment, the diffraction element portion 210 may be disposed on the incident surface 201 of the diffraction body 200 (see FIG. 3).

In another embodiment, the diffraction element portion 210 may be disposed on the exit surface 202 of the diffraction body 200 (see FIG. 4).

The diffraction element body 220 may be disposed on the diffraction element portion 210. The diffraction element body 220 may have various shapes. The diffraction element body 220 may be provided in the form of a protrusion protruding from the diffraction body 200.

Each diffraction element body 220 may be provided in a polygonal cross-sectional shape.

In an embodiment, each diffraction element body 220 may be provided in a rectangular cross-sectional shape (see FIGS. 3 and 4).

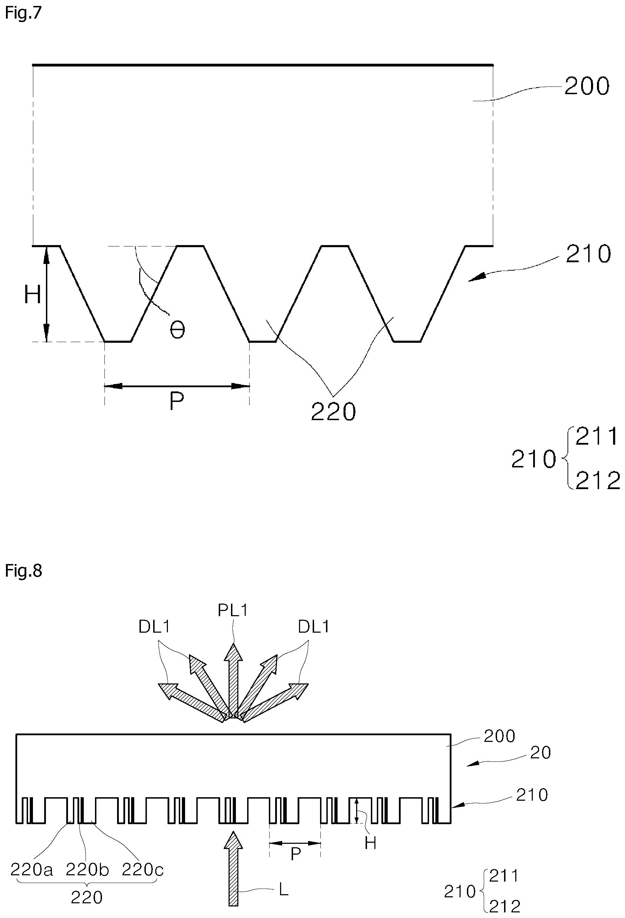

In another embodiment, each diffraction element body 220 may be provided in a trapezoidal cross-sectional shape (see FIG. 7).

In yet another embodiment, diffraction element bodies 220 having different cross-sectional shapes may form a group (see FIG. 8).

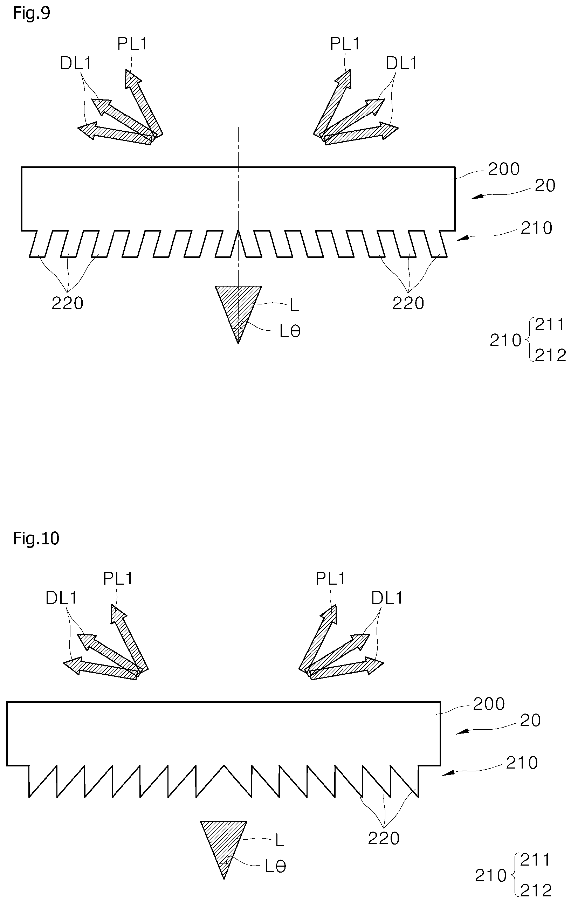

In another embodiment, the diffraction element body 220 may be provided in a rhombus cross-sectional shape (see FIG. 9).

In still another embodiment, the diffraction element body 220 may be provided in a triangular cross-sectional shape (see FIG. 10).

Referring to FIG. 3, light L may be diffracted by the diffraction element portion 210. Thereafter, the light L may be incident on the diffraction body 200 through the incident surface 201, and may exit through the exit surface 202.

Referring to FIG. 4, light L may be incident on the diffraction body 200 through the incident surface 201. Thereafter, the light L may be diffracted by the diffraction element portion 210, and may exit through the exit surface 202.

The first transmitted light PL1 that passes through the diffraction component 20 may propagate in parallel in one direction (e.g., in the +Y-axis direction). The first diffracted light DL1 that is diffracted by the diffraction component 20 may propagate in a direction intersecting with the one direction (e.g., the +Y-axis direction). In an embodiment, the first diffracted light DL1 may be diffracted in a direction (e.g., the X-axis direction) perpendicular to the one direction (e.g., the +Y-axis direction).

The first transmitted light PL1 may form a first transmitted light area PL1A, and the first diffracted light DL1 may form a first diffracted light area DL1A. The first diffracted light DL1 that is diffracted in the direction perpendicular to the one direction may form a plurality of first diffracted light areas DL1A. In an embodiment, the plurality of first diffracted light areas DL1A may be spaced apart from each other. The first transmitted light area PL1A may be located between the plurality of first diffracted light areas DL1A

As such, as the light L passes through the diffraction component 20 or is diffracted by the diffraction component 20, the light L may be dispersed, thereby increasing the field of view of the lighting module 1 for LiDAR apparatuses.

Detailed configurations of the diffraction component 20 will be described with reference to FIG. 5.

A plurality of diffraction element bodies 220 may be provided in the diffraction element portion 210 disposed on the diffraction body 200.

A length by which the diffraction element body 220 protrudes from the diffraction body 200 may be defined as a diffraction element body height H, and a length at which adjacent diffraction element bodies 220 are repeated may be defined as a diffraction element body period P.

The diffraction element body height H may range from approximately 0.5 µm to approximately 3.0 µm. In an embodiment, the diffraction element body height H may range from approximately 1.0 µm to approximately 2.5 µm. More specifically, the diffraction element body height H may range from approximately 1.5 µm to approximately 2.0 µm.

The plurality of diffraction element bodies 220 may be spaced apart at regular intervals, and may be repeatedly arranged with a preset period. The period at which the diffraction element bodies 220 are repeated may be represented as a length.

The diffraction element body period P may range from approximately 2.0 µm to approximately 5.0 µm. In an embodiment, the diffraction element body period P may range from approximately 2.5 µm to approximately 4.0 µm. More specifically, the diffraction element body period P may range from approximately 3.0 µm to approximately 3.5 µm.

A width of each diffraction element body 220 (e.g., in the X-axis direction) may range from approximately 1.0 µm to approximately 3.0 µm. In an embodiment, the width of the diffraction element body 220 may range from approximately 1.4 µm to approximately 2.5 µm.

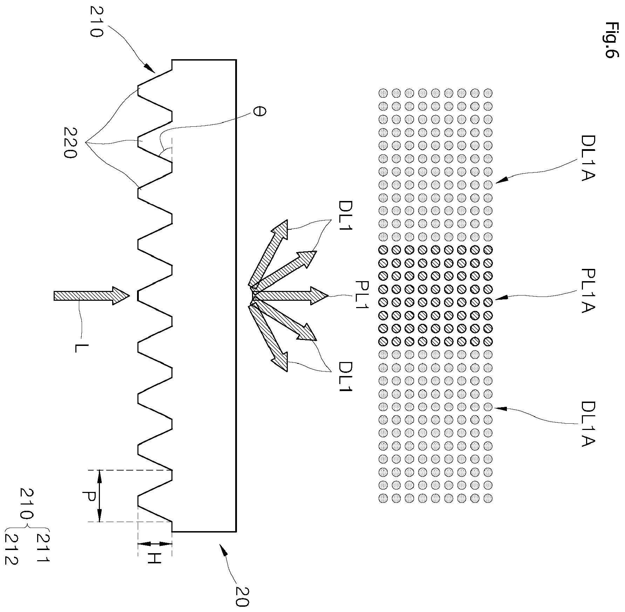

FIG. 6 schematically illustrates light emitted from a second embodiment of the diffraction element body according to the present disclosure. FIG. 7 is a sectional view schematically illustrating the second embodiment of the diffraction element body according to the present disclosure.

An embodiment of the diffraction element body 220 will be described with reference to FIGS. 6 and 7.

The diffraction element body 220 may be provided in a trapezoidal cross-sectional shape.

A diffraction element body period P and a diffraction element body height H may be the same as the diffraction element body period P and the diffraction element body height H that are described above with reference to FIGS. 3 to 5. Accordingly, a detailed description of the diffraction element body period P and the diffraction element body height H will be omitted.

One of a plurality of angles formed in the trapezoidal diffraction element body 220 may be defined as a diffraction element body inclination angle θ.

The diffraction element body inclination angle θ may range from approximately 40 degrees to approximately 80 degrees. In an embodiment, the diffraction element body inclination angle θ may range from approximately 50 degrees to approximately 70 degrees. More specifically, the diffraction element body inclination angle θ may be approximately 65 degrees.

The trapezoidal diffraction element body 220 may be provided in various forms, such as an isosceles trapezoid or a trapezoid having one right angle.

According to an embodiment, in the trapezoidal diffraction element body 220, a shorter one of opposite long and short sides may be positioned farther from the diffraction body 200 than is the longer side.

In another embodiment, in the trapezoidal diffraction element body 220, a longer one of the opposite long and short sides may be positioned farther from the diffraction body 200 than is the shorter side.

Depending on the cross-sectional shape of the diffraction element body 220, the diffraction element body period P, and the diffraction element body height H, the first diffracted light DL1 may include a plurality of higher-order beams.

In an embodiment, the first transmitted light PL1 passing through the diffraction component 20 may refer to a zero-order beam, and the first diffracted light DL1 diffracted by the diffraction component 20 may include 1st-order and 2nd-order beams.

In another embodiment, the first diffracted light DL1 diffracted by the diffraction component 20 may include a -1st-order beam and a -2nd-order beam. The first diffracted light DL1 formed with the -1st-order beam and the -2nd-order beam may be diffracted in a direction (e.g., a -X-axis direction) opposite to a direction (e.g., a +X-axis direction) in which a +1st-order beam and a +2nd-order beam are diffracted.

As the first diffracted light DL1 is diffracted in the +X-axis direction and/or the -X-axis direction, the field of view of the lighting module 1 for LiDAR apparatuses may be increased.

A diffraction angle Lo of light with respect to one direction (e.g., the Y-axis direction) may be defined by the following equation:
$sin \left(θi\right) + sin \left(Lo\right) = m * λ / p$

θi denotes an incident angle of the light L with respect to the diffraction component 20.

Lo denotes a diffraction angle of the light L diffracted by the diffraction component 20.

m denotes an order of the first diffracted light DL1 {e.g., -2nd order, - 1st order, 0th order (e.g., first transmitted light PL1), 1st order, 2nd order, ...}.

λ denotes a wavelength of the light.

P denotes the diffraction element body period P.

With respect to the above equation, when the diffraction element body period P is 3.1 µm, the wavelength λ is 0.9 µm, and the incident angle θi is 0 degree, the first diffracted light DL1 may have the following diffraction angles Lo according to the diffraction order: the -2nd-order beam of the first diffracted light DL1 is -35.5 degrees, the -1st-order beam is -16.9 degrees, the 0th-order beam is 0 degree, the 1st-order beam is 16.9 degrees, and the 2nd-order beam is 35.5 degrees.

The light L that is incident on the diffraction component 20 may propagate in a straight line. Alternatively, the light L that is incident on the diffraction component 20 may propagate at a preset light projection angle (e.g., a light projection angle Lθ in FIG. 9).

As the light projection angle Lθ has a value other than 0 degree, the incident angle θi of the light L may vary.

FIG. 8 schematically illustrates a third embodiment of the diffraction element body according to the present disclosure. FIG. 9 schematically illustrates a fourth embodiment of the diffraction element body according to the present disclosure. FIG. 10 schematically illustrates a fifth embodiment of the diffraction element body according to the present disclosure.

Various embodiments of the diffraction element body 220 will be described with reference to FIGS. 8 to 10.

In an embodiment, a plurality of diffraction element bodies 220 may form a group, and groups formed by the plurality of diffraction element bodies 220 may be repeatedly arranged at a preset period (e.g., a diffraction element body period P).

For example, a first diffraction element body 220a and a second diffraction element body 220b may form a group, and the group may be repeatedly arranged.

In another example, a first diffraction element body 220a, a second diffraction element body 220b, and a third diffraction element body 220c may form a group, and the group may be repeatedly arranged.

The first diffraction element body 220a, the second diffraction element body 220b, and the third diffraction element body 220c may have different cross-sectional shapes.

In another embodiment, the cross-sectional shape of the diffraction element body 220 may be formed as a parallelogram or a rhombus (see FIG. 9).

In still another embodiment, the cross-sectional shape of the diffraction element body 220 may be formed as a triangle (see FIG. 10).

The light L that is incident on the diffraction component 20 may propagate in a straight line (see FIG. 3), or may propagate at a preset light projection angle Lθ (see FIGS. 9 and 10).

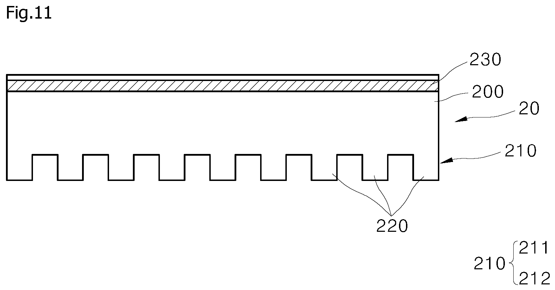

FIG. 11 schematically illustrates an embodiment in which an antireflection component is disposed on the diffraction body according to an embodiment of the present disclosure.

Referring to FIG. 11, an antireflection component 230 disposed on the diffraction body 200 will be described.

The antireflection component 230 may be disposed on the diffraction body 200. The antireflection component 230 may reduce reflection of light L on a surface of the diffraction body 200 opposite to the surface on which the diffraction element portion 210 is disposed. Accordingly, loss of the light L may be minimized.

In an embodiment, the antireflection component 230 may be disposed on a surface of the diffraction body 200.

The antireflection component 230 may have a thickness ranging from approximately 10 nm to approximately 0.5 mm. In an embodiment, the thickness of the antireflection component 230 may range from approximately 0.1 µm to approximately 0.1 mm.

The antireflection component 230 may include a high-refractive-index material and/or a low-refractive-index material.

The antireflection component 230 may be formed of one or more layers. In an embodiment, the antireflection component 230 may be formed by stacking layers made of materials having different refractive indices. Thicknesses of the layers stacked in the antireflection component 230 may be different from each other.

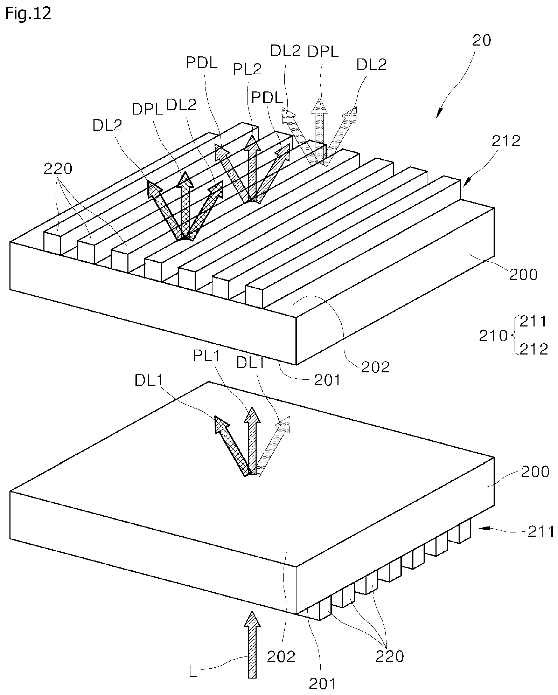

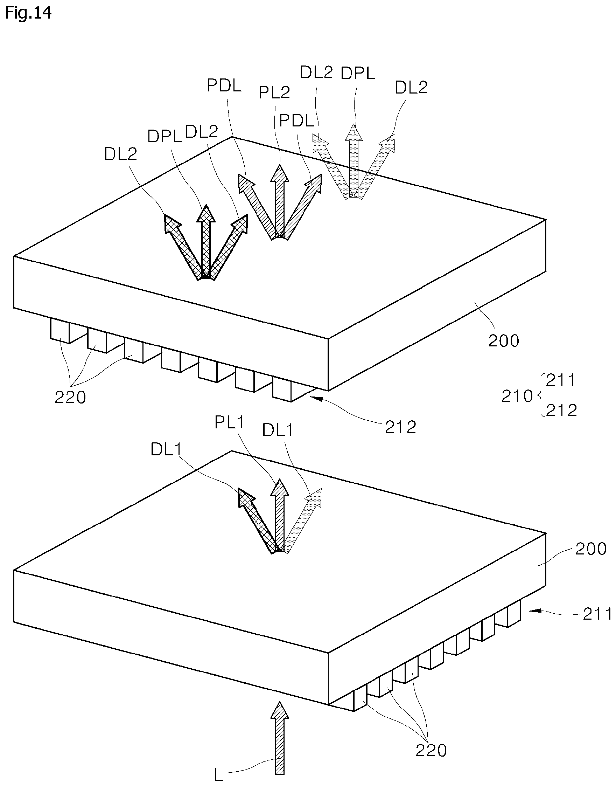

FIG. 12 is a perspective view illustrating a first embodiment of the structure of the diffraction component according to the present disclosure. FIG. 13 is a perspective view illustrating a second embodiment of the structure of the diffraction component according to the present disclosure. FIG. 14 is a perspective view illustrating a third embodiment of the structure of the diffraction component according to the present disclosure.

A first diffraction element portion 211 and a second diffraction element portion 212 of the diffraction element portion 210 will be described with reference to FIGS. 12 to 14.

The diffraction element portion 210 may include the first diffraction element portion 211 and the second diffraction element portion 212. The first diffraction element portion 211 and the second diffraction element portion 212 may diffract light L in directions perpendicular to each other.

The light L may sequentially pass through the first diffraction element portion 211 and the second diffraction element portion 212.

The light L may pass through the first diffraction element portion 211 to form first transmitted light PL1, and may be diffracted by the first diffraction element portion 211 to form first diffracted light DL1. The first diffracted light DL1 may be diffracted with respect to one direction.

The second diffraction element portion 212 may diffract the light L in a direction perpendicular to the first diffraction element portion 211.

The first transmitted light PL1 may pass through the second diffraction element portion 212 to form second transmitted light PL2, and may be diffracted by the second diffraction element portion 212 to form transmitted-diffracted light PDL. Accordingly, the transmitted-diffracted light PDL may be diffracted in a direction (second direction) perpendicular to the direction (first direction) in which the first diffracted light DL1 is diffracted.

The first diffracted light DL1 may pass through the second diffraction element portion 212 to form diffracted-transmitted light DPL, and may be diffracted by the second diffraction element portion 212 to form second diffracted light DL2. Accordingly, the second diffracted light DL2 may be diffracted in one direction by the first diffraction element portion 211, and may be diffracted in another direction by the second diffraction element portion 212.

As described above, as the light L passes through the first diffraction element portion 211, the first transmitted light PL1 and the first diffracted light DL1 may be formed. As the first transmitted light PL1 and the first diffracted light DL1 pass through the second diffraction element portion 212, the second transmitted light PL2, the transmitted-diffracted light PDL, the diffracted-transmitted light DPL, and the second diffracted light DL2 may be formed.

The second transmitted light PL2 may form a second transmitted light area PL2A, the transmitted-diffracted light PDL may form a transmitted-diffracted light area PDLA, the diffracted-transmitted light DPL may form a diffracted-transmitted light area DPLA, and the second diffracted light DL2 may form a second diffracted light area DL2A.

The diffracted-transmitted light area DPLA and/or the transmitted-diffracted light area PDLA may be arranged between a plurality of second diffracted light areas DL2A.

The second transmitted light area PL2A may be formed between a plurality of diffracted-transmitted light areas DPLA.

The second transmitted light area PL2A may be formed between a plurality of transmitted-diffracted light areas PDLA.

As such, as the light L is dispersed into a plurality of areas by the first diffraction element portion 211 and the second diffraction element portion 212, the field of view of the lighting module 1 for LiDAR apparatuses may be increased in two directions perpendicular to each other.

The first diffraction element portion 211 and the second diffraction element portion 212 may be disposed on the diffraction body 200. In an embodiment, the first diffraction element portion 211 may be disposed on one side of the diffraction body 200, and the second diffraction element portion 212 may be disposed on another side of the diffraction body 200 (see FIG. 13).

A plurality of diffraction bodies 200 may be provided. In an embodiment, the first diffraction element portion 211 may be disposed on one diffraction body 200, and the second diffraction element portion 212 may be disposed on another diffraction body 200.

In an embodiment, the first diffraction element portion 211 may be disposed on a lower side of one diffraction body 200, and the second diffraction element portion 212 may be disposed on an upper side of another diffraction body 200 (see FIG. 12).

In another embodiment, the first diffraction element portion 211 may be disposed on a lower side of one diffraction body 200, and the second diffraction element portion 212 may be disposed on a lower side of another diffraction body 200 (see FIG. 14).

The present disclosure has been described with reference to embodiments shown in the accompanying drawings, but these are merely illustrative, and those skilled in the art will recognize that various modifications and equivalent embodiments can be made therefrom. Additionally, the present disclosure may be used in other fields. Therefore, the true technical scope of the disclosure should be defined by the following claims.

## Claims

1. A lighting assembly for light detection and ranging (LiDAR) apparatuses, comprising:
a vertical cavity surface emitting laser (VCSEL) array including a plurality of light-emitting sections formed to emit light in a first direction; and
a diffraction component disposed on the VCSEL array in the first direction, and
configured to transmit a portion of the light and diffract another portion of the light.

2. The lighting assembly as claimed in claim 1, further comprising a refraction component disposed between the VCSEL array and the diffraction component, and configured to refract the light that is generated from the VCSEL array and is incident on the refraction component.

3. The lighting assembly as claimed in claim 1 or 2, wherein the diffraction component comprises:
a diffraction body; and
a first diffraction element portion provided on a surface of the diffraction body, and
configured to diffract the light in a second direction perpendicular to the first direction.

4. The lighting assembly as claimed in claim 3, wherein a propagation direction of first transmitted light that passes through the diffraction component and a propagation direction of first diffracted light that is diffracted by the first diffraction element portion intersect with each other.

5. The lighting assembly as claimed in claim 4, wherein a first transmitted light area formed by the first transmitted light is located between a plurality of first diffracted light areas formed by the first diffracted light.

6. The lighting assembly as claimed in claim 4 or 5, wherein the diffraction component comprises
a second diffraction element portion provided on a surface of the diffraction body, and configured to transmit a first portion of the first transmitted light and a first portion of the first diffracted light, and to diffract a second portion of the first transmitted light and a second portion of the first diffracted light in a third direction perpendicular to the first direction and the second direction.

7. The lighting assembly as claimed in claim 6,
wherein the first portion of the first transmitted light passes through the second diffraction element portion and forms second transmitted light,
wherein the second portion of the first transmitted light is diffracted by the second diffraction element portion in the third direction and forms transmitted-diffracted light,
wherein the first portion of the first diffracted light passes through the second diffraction element portion and forms diffracted-transmitted light, and
wherein the second portion of the first diffracted light is diffracted by the second diffraction element portion in the third direction and forms second diffracted light.

8. The lighting assembly as claimed in claim 7,
wherein a second transmitted light area formed by the second transmitted light is located between a plurality of transmitted-diffracted light areas formed by the transmitted-diffracted light, and
wherein a diffracted-transmitted light area formed by the diffracted-transmitted light is located between a plurality of second diffracted light areas formed by the second diffracted light.

9. The lighting assembly as claimed in any one of claims 3 to 8, wherein the diffraction component comprises a plurality of diffraction element bodies protruding from the surface of the diffraction body and configured to diffract the light.

10. The lighting assembly as claimed in any one of claims 3 to 9, wherein the diffraction component further comprises an antireflection component disposed in the diffraction body and configured to prevent reflection of the light.
